# FASCICULE DE BREVET EUROPEEN

(11) **EP 1 587 683 B1**
(45) Date de publication et mention de la délivrance du brevet: **23.08.2006**
(21) Numéro de dépôt: 04703825.2
(22) Date de dépôt: 21.01.2004
(51) Int. Cl.: B41J 2/01, B23K 26/18, B23K 26/04, B23K 26/02, B23K 26/08

(54) **PERIPHERIQUE PERMETTANT L'IMPRESSION ET LA DECOUPE DE FEUILLES DE PAPIER A L'AIDE D'UNE SOURCE LASER DE FAIBLE PUISSANCE**
ZUM DRUCKEN UND SCHNEIDEN VON PAPIERBÖGEN UNTER VERWENDUNG EINER LASERQUELLE MIT NIEDRIGER LEISTUNG VERWENDBARES PERIPHERIEGERÄT
PERIPHERAL WHICH CAN BE USED TO PRINT AND CUT SHEETS OF PAPER USING A LOW-POWER LASER SOURCE

(30) Priorité: 28.01.2003 FR 0300911
(43) Date de publication de la demande: 26.10.2005
(73) Titulaire: COMMISSARIAT A L'ENERGIE ATOMIQUE, 75752 Paris Cédex 15 (FR); Acher, Olivier, 37260 Monts (FR)
(72) Inventeur: ACHER, Olivier, F-37260 MONTS (FR)
(74) Mandataire: Poulin, Gérard
(86) Numéro de dépôt international: PCT/FR2004/050020
(87) Numéro de publication internationale: WO 2004/069542

(56) Documents cités:
- US-A- 5 556 826
- US-A- 5 557 311
- US-A- 5 760 369
- US-A- 6 117 061
- STEWART R ET AL: "MULTIPASS LASER ABLATION OF THREE COLOURED INK FROM A PAPER SUBSTRATE" JOURNAL OF MATERIALS PROCESSING TECHNOLOGY, ELSEVIER, AMSTERDAM, NL, vol. 114, no. 2, 20 juillet 2001 (2001-07-20), pages 161-167, XP001172418 ISSN: 0924-0136 cité dans la demande
- KAUTEK W ET AL: "LASER INTERACTION WITH COATED COLLAGEN AND CELLULOSE FIBRE COMPOSITES: FUNDAMENTALS OF LASER CLEANING OF ANCIENT PARCHMENT MANUSCRIPTS AND PAPER" APPLIED SURFACE SCIENCE, ELSEVIER, AMSTERDAM, NL, no. 129, mai 1998 (1998-05), pages 746-754, XP001172417 ISSN: 0169-4332 cité dans la demande
- CHRYSSOLOURIS, G.: "Laser Machining Theory and Practice" 1991, SPRINGER-VERLAG , NEW YORK , XP002285364 cité dans la demande page 261

## Description

### DOMAINE TECHNIQUE

L'invention concerne un dispositif permettant à la fois d'imprimer des feuilles de papier et de les découper à l'aide d'une source laser à bas coût.

Selon le préambule de la revendication 1. Un tel dispositif est publié dans US 617 061 A.

### ETAT DE LA TECHNIQUE ANTERIEURE

Les ordinateurs sont de puissants outils de conception d'objets matériels, mais ils nécessitent l'utilisation d'un périphérique pour passer de la conception à la réalisation desdits objets matériels.

Il existe de nombreux dispositifs permettant la réalisation desdits objets définis à partir d'un ordinateur, comme par exemple les outils à commande numérique, les machines de prototypage rapide et les machines de stéréolithographie. Cependant, ces périphériques mettent en jeu des technologies dont le coût n'a pas été abaissé à des valeurs qui permettraient d'en faire des périphériques grand public. De plus, ils mettent également en jeu des matières coûteuses.

Les périphériques d'impression ou imprimantes, en étant d'un coût très limité et en utilisant le papier, matière première à faible coût et très répandue, sont actuellement les seuls périphériques largement répandus dans le commerce. Cependant, les objets réalisés avec ces périphériques d'impression ont leurs caractéristiques géométriques entièrement fixées par la géométrie du support de départ : papier de format standard, support d'étiquettes, cartes prédécoupées, etc... Il est parfois possible de transformer les objets bidimensionnels, en papier ou en carton léger, en des objets de géométrie plus complexe ou en des objets tridimensionnels en utilisant des supports dont les plis sont marqués. Mais cela nécessite des supports spéciaux coûteux, et pour chaque géométrie finale de l'objet, il faut un papier spécifique prédécoupé, préencollé, avec un marquage de plis.

Par ailleurs, il existe de nombreuses techniques de découpe du papier.

Tout d'abord, il y a la technique de la découpe au moyen de lames, mais cette technique n'est adaptée qu'à la réalisation de découpes droites.

L'utilisation de découpe à l'emporte-pièce (ou « dye cutting » en anglais) n'est quant à elle adaptée qu'à la réalisation d'objets prédéfinis, correspondant à la forme de découpe de l'emporte pièce.

La découpe du papier au moyen d'un laser est bien connue en temps que procédé industriel. En particulier, l'utilisation de la découpe laser du papier à des fins de création de document a été rapportée (voir le document **[1]** dans la bibliographie en fin de description), ainsi que pour créer des objets tridimensionnels (document **[2]**). Dans tous ces cas, la découpe laser est destinée à être réalisée sur des installations professionnelles, en grande série, et généralement sur des empilements de feuilles. De plus, les lasers utilisés, de plusieurs dizaines de watts, sont d'un coût élevé. En effet, les lasers CO₂ généralement utilisés émettent à une longueur d'onde de 10,6 µm, ont un encombrement significatif, un coût notable, et nécessitent une alimentation haute tension qui contribue significativement au coût. Par ailleurs, ces lasers nécessitent une certaine maintenance et posent des contraintes de sécurité. Pour toutes ces raisons, les lasers comme moyens de découpe ne sont pas adaptés à une utilisation dans un périphérique personnel de grande diffusion.

Pour pouvoir utiliser les lasers comme moyens de découpe du papier dans un périphérique d'impression destiné au grand public, il faudrait utiliser un laser de faible coût et dont les contraintes de sécurité soient peu nombreuses.

Les diodes laser à semi-conducteur sont des lasers « état solide » attrayants en terme de coût, et qui permettent en général de se passer de systèmes de refroidissement par fluide. Sachant que plus on augmente la puissance des diodes lasers, plus les contraintes en terme de système de refroidissement sont importantes et plus le coût du dispositif augmente, on choisit des diodes lasers dont la puissance en continu est de l'ordre de 1 à 2 watts. La zone active de ces diodes laser par laquelle sort le rayonnement est de l'ordre de 100 µm x 1 µm.

Cependant, malgré leur attrait, l'utilisation de diodes lasers de quelques watts de puissance pour la découpe du papier se heurte à plusieurs types de difficultés.

Le premier problème à surmonter est que la puissance de ces diodes est inférieure aux puissances classiques utilisées pour la découpe du papier. On pourrait penser y remédier en conservant une densité de puissance importante grâce à une focalisation très poussée : le rayonnement issu de la diode laser pourrait être collecté par une fibre optique et être bien focalisé à l'aide de lentilles ou de miroirs adéquats. Mais étant donné la divergence significative de ces diodes (de l'ordre de 30°), la focalisation de l'énergie sera limitée, non seulement par les caractéristiques du système optique, mais aussi par la profondeur de champ souhaitée.

Par ailleurs, lorsqu'on choisit un laser adapté à la découpe du papier, on doit tenir compte de la longueur d'onde dudit laser. On sait en effet que l'efficacité de découpe est directement liée à l'absorption de la longueur d'onde du laser par le matériau à découper. Ici, vu que l'on désire travailler avec une diode laser de faible puissance (1 à 2 watts), on doit travailler avec une diode émettant dans le proche infrarouge. Or, le papier bureautique standard est très peu absorbant dans le proche infrarouge. Cela est lié au fait qu'il est blanc (c'est à dire non absorbant) sur tout le spectre visible, et que cette caractéristique due à la blancheur du papier n'évolue que très progressivement avec la longueur d'onde. Des mesures sur un papier bureautique standard, dont la masse est de 80 g/m², montrent en effet que dans la plage 800 nm à 1000 nm, 75% de la lumière est réfléchie et seulement 23% de la lumière est transmise. Il y a donc moins de 5% de l'intensité lumineuse qui est absorbée. C'est une situation très différente de celle rencontrée lorsqu'on utilise des lasers CO₂, où presque toute la lumière émise est absorbée. Cela réduit donc, au moins par un facteur 20, la puissance réellement disponible pour la découpe d'un papier bureautique standard, lorsque l'on utilise un laser émettant dans le proche infrarouge au lieu d'un laser CO₂. Un autre aspect défavorable à l'utilisation de diodes lasers de faible puissance pour la découpe de papier réside donc dans le fait que les diodes de faible puissance les plus accessibles en terme de coût émettent à des longueurs d'ondes comprises entre 600 nm et 1300 nm, plage dans laquelle le papier est très peu absorbant.

Les densités classiquement utilisées pour découper le papier sont de l'ordre de 500 kW/cm², comme l'indique notamment le document **[3]**. Dans ce document, le laser CO₂ est utilisé en mode pulsé, ceci afin de travailler avec une puissance moyenne limitée et une qualité de découpe excellente associée à une puissance crête élevée. Les vitesses de découpe associées sont de l'ordre de 150 m/min pour un laser de 250 watts (voir document **[4]**). Or dans le cas d'une diode laser de puissance égale à 1 watt, focalisée sur une surface de 100 µm x 50 µm, dont on a vu que c'était à peu près le mieux que l'on pouvait attendre, la densité de puissance incidente est de 20 kW/cm², soit au moins un ordre de grandeur en dessous de ce qui est pratiqué classiquement. Comme moins de 5% de la densité de puissance est absorbée, la densité de puissance utile est de l'ordre de 1 kW/cm2, soit 500 fois moins que la densité de puissance classiquement utilisée.

Enfin, même en travaillant avec des densités de puissance bien inférieures à celles classiquement utilisées, le risque de brûler le papier est toujours présent, pourvu que l'on diminue de manière conséquente la vitesse de découpe. En effet, une zone donnée du papier va s'échauffer d'autant plus qu'elle restera plus longtemps illuminée par le spot laser. Cependant, une partie de la chaleur apportée va diffuser sur une distance caractéristique (qui est la racine carrée du produit de la diffusivité thermique, par le temps de séjour nécessaire pour conduire à la combustion de la zone éclairée). Si cette longueur caractéristique dépasse la dizaine de µm, il apparaîtra une zone brunie sur les bords de la découpe, ce qui affectera l'esthétique de cette découpe. Si cette zone est plus large, alors il y aura un risque pour que le papier s'enflamme et brûle, même en dehors de la zone illuminée.

Il est connu que pour réaliser des découpes avec des puissances faibles, on peut travailler avec des lasers pulsés, avec des pulses très courts et très énergétiques. On obtient ainsi des densités de puissance instantanées importantes. Les lasers YAG sont largement utilisés pour la découpe ou l'ablation en régime pulsé, mais là encore, les diodes lasers à faible coût ne sont pas très performantes pour réaliser des pulses très intenses et brefs.

L'utilisation de lasers pulsés sur des papiers recouverts d'encre ou de taches a déjà été étudiée (voir documents **[5]** et **[6]**). Mais dans ces deux cas, il s'agissait de nettoyer et de supprimer l'encre ou les salissures absorbantes à la longueur d'onde du laser, et ceci sans abîmer le papier. L'utilisation de lasers présentant des fortes puissances crêtes, c'est-à-dire supérieures à la dizaine de kW, permet ici d'enlever l'encre absorbante à la longueur d'onde du laser sans abîmer le papier.

De même, l'utilisation de structures prédécoupées ou comportant des lignes de pliage facile et destinées à être imprimées à l'aide d'imprimantes personnelles a été aussi rapportée dans le document [7]. Cependant, les opérations de pré-découpages ou de marquages de plis du papier sont ici préalables à l'utilisation, par le client final, d'un ordinateur et d'une imprimante, assurant seulement des fonctions de décoration et de marquage en vue de l'aide à l'utilisation d'un papier prédécoupé et préencollé. Des logiciels, destinés à la création de structures tridimensionnelles imprimées, et en particulier pour des emballages, sont connus. Cependant, ces logiciels sont destinés à être interfacés avec des moyens industriels de production en série de ces emballages, et non pas pour leur production unitaire [logiciel ORIGAMI].

Enfin, il existe des imprimantes permettant de découper le papier, comme par exemple les imprimantes délivrant les tickets de transport, qui peuvent découper le ticket créé (préalablement imprimé) à partir d'un rouleau de papier continu vierge. Cependant, les solutions techniques utilisées pour cela (passage d'un couteau) ne peuvent être extrapolées à la réalisation de découpes de formes complexes.

### EXPOSÉ DE L'INVENTION

Jusqu'à présent, il n'était pas possible d'imprimer et de découper des feuilles de papier standard avec un dispositif de faible coût à la fois peu exigeant au niveau de la maintenance et fiable au niveau de la sécurité. Avec la présente invention, on résout les problèmes de l'art antérieur à l'aide d'un dispositif périphérique comprenant des moyens d'impression d'une feuille de papier, des moyens de découpe de ladite feuille de papier et des moyens de réception d'instructions, caractérisé en ce que les moyens d'impression comportent une première tête d'impression par éjection d'encre, alimentée par une cartouche d'encre conventionnelle, pour imprimer du texte ou des dessins sur la feuille de papier en fonction des instructions reçues, une deuxième tête d'impression par éjection d'encre, alimentée par une cartouche d'encre absorbante capable de pénétrer en profondeur dans la feuille de papier, pour éjecter en fonction des instructions reçues l'encre sur des endroits à découper, et les moyens de découpe comportent un laser de faible puissance émettant, en fonction d'instructions reçues, un faisceau laser à une longueur d'onde absorbée par les endroits encrés à l'encre absorbante, la puissance du laser étant suffisante pour obtenir la découpe de la feuille de papier aux endroits encrés et/ou une ablation partielle du papier.

En d'autres termes, en plus de la capacité à imprimer en noir et blanc et/ou en couleur, le dispositif d'impression selon l'invention est en outre capable d'imprimer des motifs de découpe, partielle ou totale, avec une encre absorbante à la longueur d'onde de fonctionnement du laser. Après avoir imprimé les motifs de découpe avec l'encre absorbante sur la feuille de papier, le laser vient ensuite balayer ces zones de papier rendues préalablement absorbantes afin d'assurer la découpe du papier. En rendant le papier absorbant aux endroits spécifiques du tracé de découpe et à la longueur d'onde utile du laser utilisé, on parvient ainsi à découper les papiers bureautiques standards avec des lasers de faible puissance, mais surtout de faible coût.

Notons que les impressions se feront par jet d'encre ou par toute autre technologie reposant sur l'éjection d'encre à partir d'une tête d'impression

Le dispositif selon l'invention comporte deux sortes d'encre : l'encre ou les encres destinée(s) à l'impression du papier et l'encre nécessaire à la découpe du papier. Cette dernière encre possède des caractéristiques particulières. Tout d'abord, cette encre doit être absorbante à la longueur d'onde d'émission du laser. Elle peut pour cela comporter des pigments minéraux ou organiques. Les pigments minéraux peuvent éventuellement consister en des particules très fines, d'un diamètre inférieur à 100 nm. Ce sont ces pigments qui assureront l'absorption à la longueur d'onde spécifiée.
D'autre part et contrairement aux encres classiques utilisées dans les imprimantes, cette encre est en plus formulée pour pénétrer significativement dans la profondeur du papier, voire même traverser ledit papier. On pourra utiliser dans ce but une encre comportant un solvant qui pénètre bien dans le papier, comme par exemple les encres pour marqueurs permanents. Avantageusement, ce solvant sera organique et facilement vaporisable. C'est le solvant qui assurera le transport des pigments lors de l'opération d'encrage et le transport dans l'épaisseur du papier.

Pour récapituler, l'encre absorbante selon l'invention comporte des pigments minéraux ou organiques et un solvant.

Avantageusement, l'encre sera conçue de sorte que les endroits encrés à l'encre absorbante absorbent au moins 50% du faisceau laser à sa longueur d'onde de fonctionnement. De préférence, ces endroits encrés absorberont 80% ou plus du faisceau laser.

De même, l'encre absorbante doit conserver ces bonnes propriétés d'absorption à la longueur d'onde du laser jusqu'à une température d'au moins 200°C et de préférence jusqu'à 250°C. En effet, on a constaté qu'à partir de 270°C, le papier brunit et devient absorbant dans l'infrarouge (absorption de 80 % à 800 nm, et de 35 % à 1000 nm). Il n'est donc pas indispensable que l'encre absorbante conserve ses propriétés d'absorption au-delà de 270°C. Par contre, un traitement thermique court à 250°C révèle que les propriétés infrarouges du papier bureautique standard évoluent peu à cette température. Il est donc nécessaire que l'encre absorbante remplisse sa fonction d'absorption jusqu'à une température proche de 250°C.

On pourra choisir d'amplifier la combustion de l'encre absorbante en augmentant son caractère exothermique, c'est-à-dire en ajoutant dans l'encre un constituant à fort pouvoir exothermique dont l'ignition démarrerait à une température déterminée. Selon un mode de réalisation particulier de l'invention, l'encre absorbante comportera donc un constituant qui produit une combustion exothermique lorsqu'il atteint une température critique, cette température critique étant comprise entre 150°C et 400°C.

Par ailleurs, le papier découpé ou l'objet tridimensionnel final devant avoir une esthétique soignée, il importe que l'encre absorbante qui permet la découpe n'affecte que peu ou pas l'esthétique du rendu final de l'objet en papier. Le fait que l'encre soit absorbée par le papier peut cependant, selon la qualité du papier, conduire à de légères bavures de l'encre en dehors des traits de découpe. Une solution pour conserver la qualité esthétique finale du papier découpé est alors d'utiliser une encre à la fois absorbante dans le proche infrarouge, mais également transparente ou bien blanche dans le visible.

Selon un premier mode de réalisation, l'encre absorbante sera donc incolore dans le domaine visible.

Selon un deuxième mode de réalisation, l'encre absorbante sera blanche dans le domaine visible.

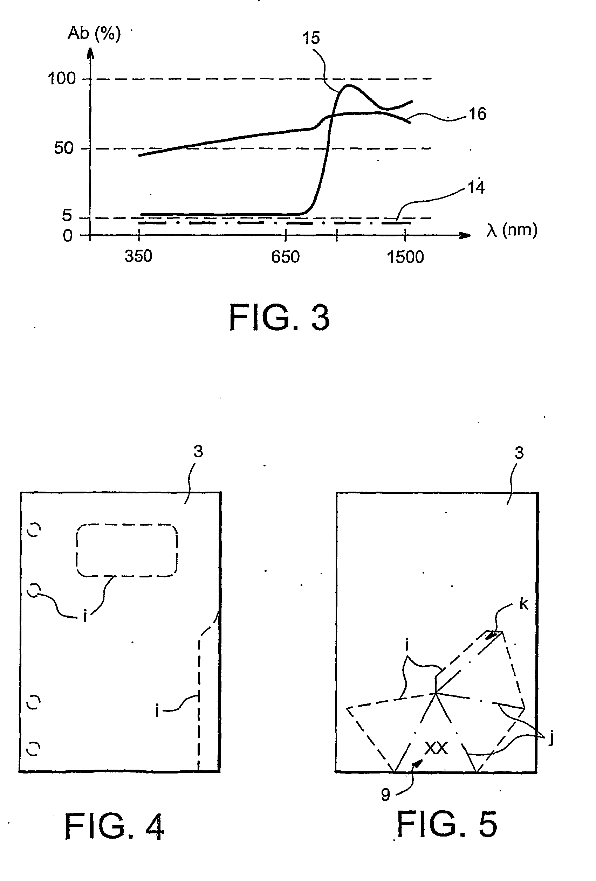

La figure 3 illustre l'absorption 14 d'un papier bureautique standard en fonction de la longueur d'onde, l'absorption 15 d'un papier après encrage avec une encre absorbante à la longueur d'onde du laser et ne présentant pas ou peu de pertes dans le domaine visible, et l'absorption 16 d'un papier après encrage avec une encre absorbante à la longueur d'onde du laser, cette encre affectant l'aspect visible du papier encré.

La deuxième tête d'impression (contenant l'encre absorbante) va éjecter de l'encre de façon à imprimer des motifs sous forme de traits, de tirets ou de points dont la largeur n'excède pas 500 µm. En particulier, ces motifs imprimés avec l'encre absorbante seront principalement des lignes (continues, tiretées ou pointillées) de largeur comprise entre 10 µm et 500 µm. Ces dimensions sont accessibles avec les résolutions typiques des imprimantes à jet d'encre, bulle d'encre, etc... On notera qu'une résolution de 600 dpi correspond à des points de diamètres de 40 µm. Préférentiellement, la largeur des lignes sera comprise entre 50 µm et 200 µm.

On notera l'importance d'avoir une bonne définition sur les traits réalisés avec cette encre, ce qui permet d'éviter que la combustion de l'encre ne s'étende à tout le papier et éviter ainsi les risques d'incendies.

Pour obtenir cette bonne définition sur les traits tout en ayant une quantité suffisante d'encre absorbante projetée sur le papier, la deuxième tête d'impression par éjection d'encre contenant l'encre absorbante éjectera de préférence une quantité d'encre comprise entre 0,5 et 5 nl par mm de trait de découpe.

On choisira avantageusement de déposer l'encre absorbante sur la face du papier opposée à celle sur laquelle sera effectuée la découpe.

Et si le dispositif possède un système de retournement de la feuille, on pourra choisir d'encrer les deux faces de la feuille de papier.

Concernant le laser présent dans le dispositif selon l'invention, il possède des caractéristiques de focalisation et de balayage particulières.

Tout d'abord, le laser émet un faisceau laser à une longueur d'onde comprise entre 650 et 1600 nm. Préférentiellement, la longueur d'onde d'émission du laser se situera dans la gamme 800 nm à 1100 nm.

Avantageusement, la puissance lumineuse moyenne du laser est comprise entre 0,5 et 10 watts, mais sera préférentiellement comprise entre 1 et 4 watts.

Le laser fonctionnera en continu ou en mode pulsé, au choix, mais, si le laser fonctionne en mode pulsé, il aura dans tous les cas des puissances de crêtes n'excédant pas 100 fois la puissance moyenne. De préférence, les puissances de crêtes n'excéderont pas 10 fois cette puissance.

Selon un mode particulier de l'invention, le laser comprendra une ou de plusieurs diodes lasers semi-conductrices.

Avantageusement, le laser pourra comprendre un dispositif de focalisation du faisceau laser, ceci afin que le dispositif de focalisation fournisse une tache lumineuse ou spot dont les dimensions seront comprises entre 10 µm et 400 µm, sur une profondeur de champ d'au moins 80 µm.

Préférentiellement, la tache lumineuse de focalisation aura une surface comprise entre 2.10⁻³ et 4.10⁻² mm². On notera que l'on se trouve là dans des gammes typiques de densités de puissances nettement inférieures à ce qui est recommandé par l'état de l'art : 4 W sur 2.10⁻³ mm² correspond à une densité de puissance de 200 kW/cm² et 1 W sur 4.10⁻² mm² correspond à une densité de puissance de 2,5 kW/cm².

La vitesse de déplacement du faisceau laser sera préférentiellement comprise entre, par exemple, 30 cm/min et 10 m/min si l'on utilise une diode laser de 10 watts, et entre 30 cm/min et inférieure à 2 m/min pour le cas préférentiel où l'on utilise une diode laser de 2 watts.

Les manières d'obtenir des déplacements relatifs entre un laser et un objet à découper sont largement connus de l'homme du métier. De même, les moyens de préhension et de défilement du papier dans un périphérique d'impression ou de reproduction sont connus. De préférence, les moyens d'impression et les moyens de découpe de la feuille de papier seront situés sur un même chariot de déplacement latéral : on positionnera les fonctions d'impression et de découpe laser sur le même dispositif d'entraînement du papier, ceci afin de permettre une excellente concordance entre les positions des traits d'encrage et la découpe laser, en particulier si la zone d'émission laser est portée par le même chariot de déplacement transverse que les têtes d'impression.

Cependant, à la différence des têtes d'impression qui sont capables d'imprimer instantanément une zone d'une certaine longueur grâce à leurs multiples buses et qui génèrent donc des à-coups d'avance du papier de plusieurs mm, le laser nécessite en général des mouvements réguliers du dispositif d'entraînement du papier à une vitesse qui est dépendante du motif à tracer. Pendant la découpe d'un trait longitudinal par exemple, il est souhaitable que le mécanisme d'avance du papier entraîne celui-ci à une vitesse régulière, fixée par la vitesse de découpe. Pendant la réalisation d'un trait latéral, au contraire, seul le chariot de déplacement latéral du laser bouge, le papier n'avançant pas.

Ainsi, s'il est fondamental que l'encrage absorbant et la découpe laser soient fait en cohérence, les contraintes en terme d'avance papier et d'avance chariot sont différentes.

Dans un premier mode de réalisation de l'invention, on n'installe qu'un seul système d'entraînement du papier : la feuille de papier est d'abord encrée lors d'un premier défilement qui ne libère pas la feuille, puis celle-ci est replacée en position initiale afin que la découpe laser puisse avoir lieu.

Dans un deuxième mode de réalisation, le dispositif périphérique selon l'invention comporte deux zones d'entraînement de la feuille de papier, l'une des zones d'entraînement étant réservée à l'encrage, l'autre à la découpe. Ces deux zones d'entraînement sont toutefois capables de prendre les mêmes repères sur le papier (en particulier grâce aux opérations d'alignement). Selon ce deuxième mode de réalisation, les moyens de découpe seront donc en aval des moyens d'impression sur le chemin du papier.
L'avantage d'un tel système est essentiellement la vitesse de réalisation de l'impression et de la découpe.

Selon un troisième mode de réalisation, le dispositif de manipulation du papier autorise le passage du papier à la fois sur le recto et sur le verso. Dans ce cas, si l'on désire réaliser des découpes partielles destinées au marquage de pli, celles-ci seront réalisées sur la face opposée au pliage visée.

Bien entendu, dans tous ces cas, on peut aussi envisager de laisser le laser fixe et de le coupler à une fibre optique, la tête de découpe étant alors constituée de l'extrémité de la fibre optique par lequel sort le rayonnement laser et de son système de focalisation. Dans ce cas, ce sera la tête de découpe qui se déplacera.

Par ailleurs, il est souhaitable de prendre des précautions particulières afin d'éviter que la feuille de papier ne s'enflamme lors de sa découpe. Ceci est d'autant plus vrai que dans une utilisation non professionnelle, le support inséré dans le dispositif selon l'invention peut non seulement être une feuille de papier adéquate, mais aussi un support papier de mauvaise qualité plus ou moins inflammable, éventuellement souillé par de l'alcool ou tout autre produit inflammable.

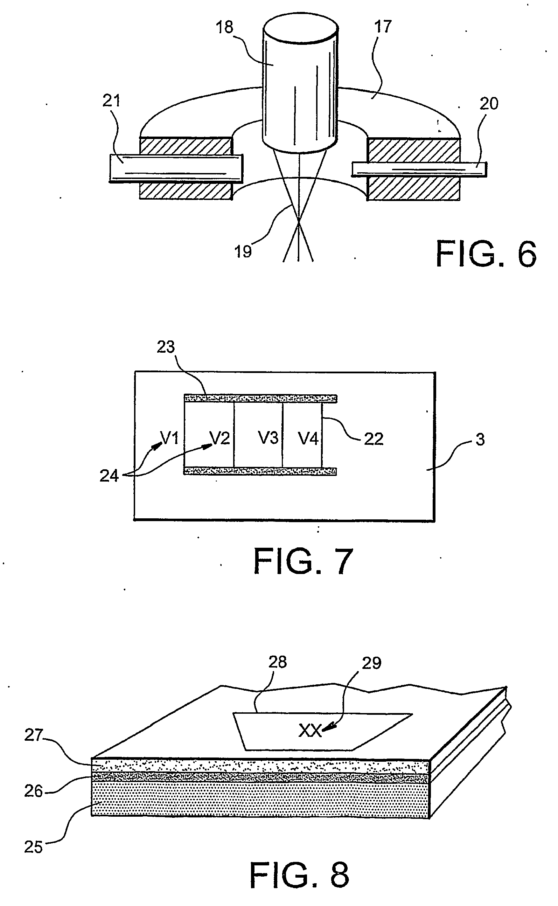

Afin de prévenir les risques de combustion du papier, même avec des supports très inflammables, on pourra préférer qu'au moins une face de la feuille de papier au voisinage de la zone illuminée par le laser se trouve en contact avec un matériau dont la diffusivité thermique serait au minimum de 1,5.10⁻⁶m²/s, soit dix fois supérieure à celle du papier, et préférentiellement supérieur à 1.10⁻⁵m²/s. En effet, le matériau à forte diffusivité agit alors comme un puits de chaleur, et peut ainsi éviter que la combustion ne soit entretenue. Le matériau pourrait être constitué d'une matière conduisant bien la chaleur (du cuivre par exemple). Pour réaliser ce puits de chaleur, on peut disposer le papier sur un rouleau d'entraînement qui présenterait ces caractéristiques thermiques. De même, le matériau en contact avec la feuille de papier au voisinage de la zone illuminée par le laser peut être sous la forme d'une tête de découpe laser qui comporterait :
- une zone de contact avec la feuille ayant une surface d'au moins 0,5cm²,
- une partie ajourée dans cette zone de contact permettant le passage du faisceau laser et ayant, à l'endroit où elle est en contact avec le papier, une section égale ou supérieure à 1 mm²,
- une arrivée d'air pur et un conduit d'évacuation des fumées de combustion permettant d'évacuer les fumées et les débris de papier générés de manière normale par l'opération de découpe.
Une coupe d'une réalisation possible d'une tête de découpe comportant une zone de contact périphérique à la découpe est représentée dans la figure 6. Dans cet exemple de réalisation, la tête de découpe comporte une pièce en matière à forte conductivité thermique 17, ladite pièce étant ajourée pour recevoir l'optique de focalisation 18 du faisceau laser 19, et percée de trous permettant l'arrivée d'air 20 nécessaire à la combustion du papier et l'évacuation 21 des gaz et des particules de combustion. Notons que dans la figure 6, les éléments 20 et 21 sont sous la forme de tubes.

On a vu plus haut que l'encrage absorbant et la découpe laser devaient être fait en cohérence. Pour cela, il faut qu'il y ait alignement du faisceau laser avec la cartouche absorbante, ainsi qu'alignement des fonctionnalités d'impression avec celles de découpe. La nécessité d'avoir une bonne correspondance entre les traits (ou les trous ou les découpes partielles) de marquage à l'encre absorbante et le balayage du faisceau laser, alors même que l'opérateur peut avoir à changer les cartouches d'encre de marquage, peut nécessiter une procédure d'alignement entre les cartouches d'encre et le laser. Une telle procédure est classique sur les imprimantes à jet d'encre, en particulier après chaque changement de cartouche, où il est nécessaire de déterminer les éventuels décalages entre les positions effectives des cartouches et leur position nominale. De manière générale, ces décalages résiduels sont inférieurs à 500µm.

L'alignement se fait classiquement sur le principe du vernier. Deux têtes d'impression à aligner impriment des paires de traits situés dans la continuité l'un de l'autre et présentant de petits décalages. L'observateur indique alors, à l'imprimante ou à l'ordinateur qui la pilote, quels sont les jeux de traits bien alignés, permettant ainsi de connaître les décalages résiduels et d'y remédier (par exemple de manière logicielle). Dans notre invention, il s'agit de mettre en cohérence une cartouche d'encre absorbante et le spot laser. Comme l'encre absorbante dans l'infrarouge est, de manière préférentielle, peu ou pas visible dans le domaine visible, on comprend qu'il convient de trouver un nouveau procédé pour aligner le faisceau laser avec la cartouche absorbante.

La procédure d'alignement du faisceau laser par rapport à une cartouche d'encre conventionnelle pourra par exemple être réalisée de la manière suivante. Tout d'abord, une première série de marques parallèles est réalisée sur une feuille à l'aide d'une cartouche d'encre de la première tête d'impression (encre noire ou de couleur). Ces marques sont séparées d'un espace ou pas déterminé (appelé premier pas déterminé). Puis, on réalise un deuxième série de marques parallèles, en face de la première série de marques, à l'aide de la cartouche d'encre de la deuxième tête d'impression (encre absorbante). Ces marques ont une largeur d'encrage suffisante pour compenser le désalignement possible entre la cartouche d'encre absorbante et le laser, et sont espacées d'un pas déterminé différent du premier pas séparant les marques réalisées à l'encre noire ou de couleur. Des découpes laser (partielles ou totales) sont alors réalisées à l'aide du laser sur la série de marques encrées à l'encre absorbante. L'observation des découpes permet à l'opérateur d'indiquer à l'imprimante ou à l'ordinateur pilote quelles sont les marques (imprimées à l'encre conventionnelle, c'est-à-dire noire ou de couleur) qui coïncident avec les découpes, et ainsi de connaître les bonnes conditions d'alignement.

Il est souhaitable aussi d'assurer l'alignement entre la cartouche d'encre absorbante et le faisceau laser. Dans un premier temps, on pourra réaliser une zone de marques parallèles sur une feuille de papier à l'aide de la cartouche d'encre absorbante de la deuxième tête d'impression, chaque marque ayant une largeur ne dépassant pas celle du spot laser et chaque marque étant séparée d'un premier pas ou espace déterminé. Puis, on utilisera le faisceau laser pour réaliser des lignes de spots dans la zone de marques précédemment réalisée, les lignes de spots étant parallèles aux marques précédentes et étant séparées d'un pas déterminé différent du premier pas séparant les marques. Enfin, en observant les marques, on pourra désigner à l'imprimante ou à l'ordinateur pilote quelles marques auront subi une découpe.
On aura intérêt à réaliser les marques sous forme de motifs délimitant des volets (voir figure 7), de sorte que l'on puisse s'assurer de l'état complet ou non de la découpe simplement en appuyant du doigt sur le volet, de façon à observer si celui-ci s'ouvre ou non. Le repérage des différents volets de test, nécessaire pour que l'utilisateur puisse indiquer au système lequel correspond effectivement au rattrapage des jeux résiduels, se fera à l'aide de la fonction conventionnelle d'impression. Ainsi, l'observation des découpes permettra de désigner à l'imprimante ou à l'ordinateur pilote les marques imprimées qui coïncident avec les découpes. Par exemple, on a, dans la figure 7, un motif imprimé sur un support papier 3 encré avec de l'encre absorbante et comportant des indications 24 imprimées à l'encre « conventionnelle » (encre noire ou de couleur, c'est-à-dire l'encre classique d'impression). Ce motif est destiné à la procédure d'alignement du laser et de la tête d'encrage d'encre absorbante. Il comporte une pluralité de bandes fines 22 encrées à l'encre absorbante qui ne permettent la découpe du papier que s'il y a coïncidence entre le trait encré et le laser avec la précision d'alignement recherchée, et des bandes encrées larges 23, orthogonales aux précédentes, qui permettent la découpe complète du papier même en tenant compte de l'incertitude d'alignement.

Enfin, on peut prévoir un troisième ajustement qui consisterait à déterminer la vitesse adéquate pour permettre une découpe complète. En effet, la connaissance imparfaite de la puissance laser, les dérives de celles-ci, la nature plus ou moins épaisse du papier et son aptitude plus ou moins bonne à absorber l'encre absorbante etc..., tous ces paramètres peuvent conduire à des variations des vitesses de balayage du laser nécessaires à la découpe complète. Pour réaliser cet ajustement, on peut effectuer des marques (préférentiellement sous forme de volets) à l'aide de la cartouche d'encre de la deuxième tête d'impression (encre absorbante) sur une feuille de papier et effectuer des passages du spot laser sur celles-ci à différentes vitesses. Le repérage et l'observation par l'opérateur des conditions à partir desquelles on obtient une découpe complète lui permettent de désigner le repère correspondant sur le périphérique ou bien sur l'ordinateur qui le commande. Cette désignation est facilitée par le fait qu'il est possible d'inscrire en clair sur le papier les références des différentes marques grâce à la fonction d'impression.

Par ailleurs, il est intéressant d'avoir un système informatique comprenant, d'une part un ordinateur et un logiciel, et d'autre part un dispositif périphérique selon l'invention. L'ordinateur et le logiciel vont permettre de définir des motifs à découper en cohérence avec les motifs à imprimer que l'on veut réaliser sur une feuille de papier, et ils vont fournir au dispositif périphérique des instructions permettant à ce dernier de réaliser ces impressions et découpes.

Dans l'invention, on adoptera de manière préférentielle un défilement de la feuille selon une direction et le balayage du faisceau laser dans la direction perpendiculaire, comme cela est souvent réalisé dans le cas des imprimantes.

Pour faciliter la manipulation du papier par le périphérique selon l'invention et éviter que des morceaux découpés ne viennent perturber le fonctionnement du mécanisme d'entraînement, il peut être intéressant que l'ordinateur et le logiciel fournissent également des instructions au dispositif périphérique lui permettant de réaliser des interruptions (ou languettes) dans la découpe du papier par rapport au motif de découpe visé. L'ordinateur et le logiciel déterminent des zones dans lesquelles le laser du dispositif se contentera de fragiliser le papier plutôt que de le découper totalement, laissant le soin à l'opérateur de détacher plus tard les chutes des zones utiles. Cela permettra ainsi à la feuille de papier de sortir en un seul morceau du dispositif et d'éviter les bourrages. L'ordinateur et le logiciel pourront se charger de placer les languettes de manière judicieuse, en fonction des caractéristiques mécaniques du papier et de l'ergonomie.

Avantageusement, le système informatique pourra faciliter la tâche de l'utilisateur en l'aidant à repérer les parties à détacher et à jeter, en faisant réaliser au dispositif périphérique des motifs reconnaissables ou des instructions sur lesdites parties ou des parties cachées de l'objet final permettant à l'utilisateur de repérer facilement quoi détacher et éventuellement quoi jeter. En d'autres termes, le système informatique distingue les zones de papier découpées à éliminer à l'aide d'un marquage approprié réalisé avec la première tête d'impression.

Selon l'invention, on procède également à la création de documents ou d'objets papiers en utilisant le système informatique tel que défini précédemment.
De même, si un certain nombre de réalisations rendues possibles par l'invention sont des éléments en papier qui ne nécessitent pas de collage, une autre possibilité offerte par l'invention est de réaliser, par exemple, des objets papiers assemblés par collage. Or, pour l'obtention d'un résultat de bonne qualité et pour des raisons pratiques, il serait attrayant de pouvoir réaliser l'encollage des divers objets papiers au moyen du même dispositif que celui ayant servi à leur impression et à leur découpage. Ainsi, on procède à la réalisation d'une structure collée en suivant les étapes suivantes. Tout d'abord, on réalise un document à partir d'une feuille de papier au moyen du système informatique selon l'invention, ledit document comportant au moins une partie à encoller repérée par un motif d'encollage. Puis on fournit au dispositif phériphérique un multicouche comportant successivement un support siliconé 25, un film d'adhésif 26 et une pellicule superficielle imprimable 27. Les éléments constituant ce multicouche ont des particularités :
- le film d'adhésif adhére mieux à la pellicule qu'au support siliconé, et adhére mieux au document réalisé dans la première étape (c'est-à-dire, le document que l'on veut encoller) qu'à la pellicule superficielle,
L'adhésion de l'adhésif sur le support siliconé doit être moins bonne que sur la pellicule superficielle, de façon à ce que l'opérateur puisse décoller facilement l'ensemble constitué du film d'adhésif et de la pellicule superficielle imprimable.
- la pellicule et le film d'adhésif sont absorbants à la longueur d'onde de fonctionnement du laser.
Les caractéristiques d'absorption de l'adhésif et de la pellicule superficielle sont suffisantes pour obtenir une découpe avec le laser avec une bonne efficacité.
Le support siliconé, quant à lui, sera choisi de sorte que ses caractéristiques thermiques et d'absorption lui permettent d'être peu ou pas affecté par le laser, compte tenu aussi des vitesses de défilement dudit laser. On réalise ensuite sur le multicouche un motif d'encollage 29 (indications écrites ou repères graphiques) correspondant au motif d'encollage réalisé sur le document, par impression de la pellicule superficielle à l'aide de la première tête d'impression du dispositif périphérique. Cette impression avec un motif et/ou des éléments de repérage facilitera le positionnement de l'ensemble adhésif et pellicule superficielle découpé sur l'endroit du document que l'on veut encoller. Puis, on réalise une découpe 28 sur le multicouche au moyen du laser, ceci afin de délimiter dans les deux couches supérieures du multicouche (pellicule superficielle et film d'adhésif) une zone englobant le motif d'encollage et dont les dimensions correspondent à la partie à encoller du document. On sépare ladite zone du support siliconé, on positionne la zone, côté film adhésif, sur le document en faisant correspondre les motifs d'encollage du document et de la pellicule superficielle et on retire la pellicule superficielle de ladite zone. Il faut noter que l'adhérence du film d'adhésif sur le document (papier bureautique standard) étant meilleure que son adhérence sur la pellicule superficielle, on pourra, une fois que l'élément découpé constitué de l'adhésif et de la pellicule superficielle aura été pressé sur la zone adéquate du document, retirer la pellicule superficielle sans que le film d'adhésif ne se décolle du document papier. Une fois la pellicule superficielle retirée, l'opérateur peut procèder à l'encollage d'une partie du document sur lequel se trouve le film d'adhésif ou d'un autre document. En effet, on pourra, au choix, encoller une autre zone du même document ou d'un autre élément papier prévu, ou alors on pourra réaliser le report du document papier rendu adhésif sur un support.

Le film d'adhésif choisi sera un film adhésif adhérant par pression. L'adhésif peut avoir deux faces identiques ou bien comporter une face bien adhérente sur le papier et une autre face (celle supportant la pellicule imprimable) qui soit à base de colle repositionnable.

En résumé, le dispositif selon l'invention lève les principaux obstacles représentés par :
- la nécessité de parvenir à une bonne qualité de découpe avec des sources lasers produisant des densités de puissances limitées et émettant à des longueurs d'ondes où le papier est très peu absorbant,
- l'élimination des risques d'incendie, alors que le laser brûle le papier,
- l'utilisation de mécanismes de manipulation du papier sans que les chutes de découpes n'entraînent de bourrage.

Le fait de rendre réalisable à l'aide d'un équipement de bureautique à faible coût l'ensemble des opérations nécessaires à la réalisation d'une structure éventuellement tridimensionnelle et imprimée ouvre de nombreuses possibilités, comme celle de la récupération sur Internet d'objets tridimensionnels amusants, à vocation ludique et décorative, mais aussi publicitaires. On peut aussi envisager la réalisation de documents comportant des fenêtres, des onglets, des oeillets déjà perforés, des pliages, qui sont des applications réservées jusqu'à présent aux brochures professionnelles. En particulier, le dispositif selon l'invention permet de réaliser de nombreux objets tels que :
- des rapports de plusieurs pages comportant des onglets qui permettent d'accéder directement aux chapitres figurant sur l'onglet, ou des fenêtres destinées par exemple à ne faire apparaître que le titre du rapport lorsque celui-ci est fermé, la première page masquant toutes les informations de la seconde page à l'exception de la zone de titre,
- des petits mémos comportant des formes expressives (coeur) ou amusantes et facilitant leur emploi (comme le marquage de plis dans une lettre devant être pliée),
- l'édition de documents comportant des parties détachables (factures, jeux, etc...),
- des petits objets ludiques ou publicitaires (avions en papier, effigies de personnages ou d'animaux...), obtenus par combinaison de découpe et de pliage, et éventuellement de collage.

### BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 est un schéma d'un dispositif d'encrage et de découpe selon l'invention,
- les figure 2A et 2B présentent une feuille de papier encrée et découpée selon l'invention,
- la figure 3 est un graphique présentant l'absorption d'un papier bureautique standard, encré ou non, en fonction de la longueur d'onde,
- les figures 4 et 5 présentent des exemples de réalisation accessibles avec le dispositif selon l'invention à partir d'une feuille de papier standard.
- la figure 6 représente une tête de découpe,
- la figure 7 est un motif imprimé sur un support papier et destiné à la procédure d'alignement du laser et de la tête d'encrage d'encre absorbante,
- la figure 8 est un multicouche utilisé au cours du procédé de réalisation d'une structure collée.

### EXPOSÉ DÉTAILLÉ DE MODES DE RÉALISATION PARTICULIERS

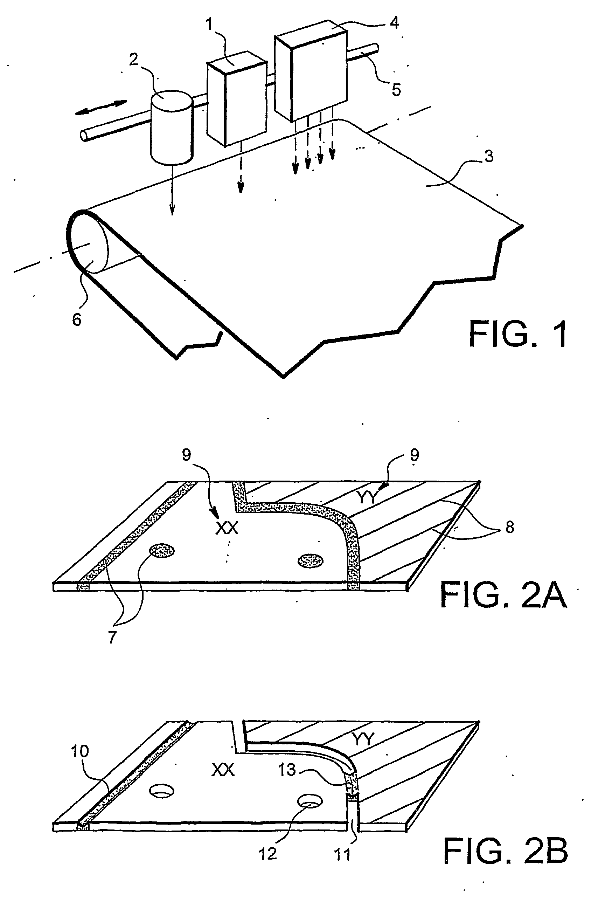

Le dispositif périphérique, selon une version particulière de l'invention, est illustré dans la figure 1. Il comporte un moyen de préhension et de défilement 6 d'une feuille papier 3 sous la forme de rouleaux. Un porte-chariot 5, qui se déplace parallèlement à l'axe des rouleaux, comporte une cartouche d'encre noire 4 et une cartouche d'encre couleur 4, et permet de réaliser l'impression du papier 3 par éjection d'encre. Tout cela est présent avec différentes variantes dans les imprimantes vendues dans le commerce. Le dispositif selon l'invention comporte en outre une cartouche 1 contenant un réservoir d'encre absorbante dans le proche infrarouge. Cette encre pourra être, par exemple, l'encre présente dans les feutres marqueurs permanents de marque Reynolds, de couleur noire ou bleue.

La cartouche d'encre absorbante a la capacité de projeter l'encre en des traits droits ou arrondis, continus ou interrompus, et dont la largeur peut être aussi faible que 80 µm.

La quantité d'encre projetée est significativement plus importante qu'avec les cartouches classiques, et comprise entre 0,5 et 5 nanolitres par mm de longueur pour un trait de largeur 80µm.

La quantité d'encre ainsi que la nature de son solvant et de ses pigments la conduisent à être rapidement absorbée par les feuilles de papier ordinaire (papier bureautique standard de 80 g/m²) au point de traverser le papier (ou presque).

On utilise comme source laser 2 une diode laser émettant à 850 nm et capable d'émettre 2 watts en continu. Elle est montée sur le même chariot de déplacement latéral 5 que les têtes d'impressions 1 et 4, et a son rayonnement focalisé par une optique adaptée. Cette optique focalise le rayonnement laser sur le papier avec une taille de spot voisine de 100 µm et ceci sur une profondeur de champ de 100 µm correspondant à l'épaisseur du papier.

Le périphérique selon l'invention est contrôlé par un ordinateur et des logiciels adaptés qui permettent de définir les mouvements, ainsi que le fonctionnement des buses d'impression et du laser. Plus précisément, ces logiciels permettent de définir les impressions à réaliser, ainsi que le schéma de découpe et les zones de pliage. Grâce à la combinaison du moyen de défilement 6 du papier et de translation 2 du laser, le laser passe sur les traits encrés à l'encre absorbante à une vitesse de 70 cm/min pour les traits à découper complètement, et à une vitesse de 2,5 m/min lorsqu'il s'agit seulement de faire un marquage de pli. L'impression du papier, y compris avec l'encre absorbante, est faite lors d'un premier passage, puis le papier est replacé en début de page par le système de manipulation du papier et un deuxième passage du papier est consacré à la découpe à l'aide du laser 2.

Afin d'éviter le bourrage du dispositif de manipulation du papier, le système de découpe laisse des zones 13 qui vont permettre de maintenir solidaires certaines parties de la feuille découpée. La position et les caractéristiques de ces zones 13 ou languettes de maintien sont déterminées par le système informatique, en tenant compte de la géométrie de la découpe visée et des efforts entraînés par la manipulation du papier. On voit par exemple sur la figure 2A un papier 3 comprenant des motifs d'encrage absorbant 7, des motifs imprimés 8 ainsi que des indications utiles pour la finalisation de la découpe et du pliage 9. Après le passage du laser 2 (figure 2B), on obtient des lignes de découpe 11, des trous de découpe 12, des lignes de destruction partielles du papier destinées au pliage 10 et des languettes 13 correspondant à une ablation partielle du papier. Ces languettes sont situées sur une ligne de découpe et permettent d'éviter le bourrage des parties découpées dans le système d'entraînement du papier.

Le dispositif périphérique et le système informatique selon l'invention permettent de réaliser de nombreux objets papier à partir d'une feuille de papier standard 3. Par exemple, on peut obtenir une page de rapport comportant une fenêtre, des perforations destinées à insérer la feuille dans un classeur et un onglet (figure 4). Notons qu'on a fait figurer par des tirets(i) les découpes réalisées.

Selon un autre exemple de réalisation, en plus de l'impression et de la découpe, on peut réaliser des collages. Dans cet exemple de réalisation, l'encre absorbante utilisée est composée d'un solvant et de pigments absorbant à la longueur d'onde de 1100 nm. La tête d'impression permet de réaliser des motifs à l'aide de cette encre, avec une résolution au mieux de 40 µm. Le laser est une diode laser émettant à 1100 nm, capable d'émettre 1 watt en continu et ayant une surface d'émission de 1 µm x 100 µm. Le faisceau laser est focalisé au moyen d'une lentille de façon à obtenir un spot d'un diamètre de l'ordre de 100 µm. Cette diode laser est montée dans une pièce en laiton comportant une base plate et comportant au centre un trou de diamètre 250 µm par lequel sort le faisceau laser. Le foyer de la diode laser se situe de 0 à 50 µm au-delà de la base plate. La diode laser est montée sur son propre chariot de déplacement qui permet de réaliser un déplacement parallèle au rouleau d'entraînement de la feuille de papier. La base de la pièce de laiton est placée en contact avec la feuille de papier, sur la face opposée à la face encrée avec les encres d'impression et l'encre absorbante. On a deux avantages à attaquer la découpe du côté opposé à l'encrage :
- d'une part, on peut ainsi assurer le contact de la pièce de laiton sur la feuille de papier, sans risquer d'étaler l'encre d'impression qui ne serait pas totalement sèche,
- d'autre part, si l'encre absorbante pénètre incomplètement dans le papier, l'action de chauffage et d'ignition du laser est plus efficace sur la totalité de l'épaisseur du papier, du fait que l'absorption par le laser augmente au fur et à mesure que le rayonnement laser progresse dans le papier, alors même que ce rayonnement s'atténue en progressant.

On pourra avoir intérêt à ce que le système d'avance du papier soit distinct du système d'impression et se situe en aval de ce dernier. Ainsi, le périphérique peut imprimer et encrer une feuille, pendant qu'une feuille précédemment traitée est découpée. On peut aussi plus facilement optimiser l'environnement thermo-optique, en séparant l'étage de découpe et l'étage d'encrage.

Il est alors nécessaire d'avoir une procédure d'alignement efficace, au moins entre le laser et l'encre absorbante, pour pouvoir tenir compte des jeux qui peuvent exister entre les deux étages du système de manipulation de papier, et les décalages dus au montage des cartouches ou des têtes d'impression. Pour cela, on pourra réaliser le motif en échelle encrée à l'encre absorbante comportant des repérages imprimés (voir la figure 7). Le laser découpera les montants 23 de l'échelle, et fera pour chaque barreau 22 une hypothèse différente sur le décalage entre l'étage d'impression et l'étage de découpe. L'observation par l'utilisateur du barreau donnant lieu à une ouverture complète lui permettra de renseigner le système sur l'état de décalage.

On pourra choisir d'insérer dans ce dispositif des feuilles d'adhésif ou multicouches comportant un support siliconé (par exemple un papier siliconé), une feuille d'adhésif absorbante à la longueur d'onde du laser et une pellicule en papier, cette pellicule étant imprimable ainsi qu'absorbante dans le proche infrarouge.
Le système pourra réaliser des découpes dans les deux couches superficielles uniquement (feuille d'adhésif et pellicule imprimable), à l'aide du laser et sans encrage à l'encre absorbante au préalable, en ayant toutefois pris soin de reporter au préalable tous les repérages utiles grâce à une impression sur la pellicule supérieure. On peut ainsi disposer de films de colles transférables, parfaitement ajustés aux dimensions requises et réalisés en cohérence avec les objets. Par exemple, on pourra réaliser une languette de colle en cohérence avec la languette k de l'objet papier représenté dans la figure 5, cette languette étant nécessaire pour transformer l'objet plié en un volume. L'objet papier représenté sur la figure 5, qui, une fois monté, forme une pyramide, comporte des découpes i (tirets), des marquages de pli j (traits mixtes), des indications imprimées 9 ainsi qu'une languette destinée au collage k.

### BIBLIOGRAPHIE

[1] Brevet américain US5557311, délivré le 17 septembre 1996.
[2] Brevet américain US5760369, délivré le 2 juin 1998.
[3] Brevet américain US5556826, délivré le 17 septembre 1996.
[4] « Laser Machining, Theory and Practice », Georges Chryssolouris, Springer, 1981, p 261.
[5] « Laser interaction with coated collagen and cellulose fibre composites : fundamentals of laser cleaning of ancien parchment manuscript and paper », par Kautek W., Pentzien S., Rudolph P., Kruge J., Konig E., Applied Surface Science, 129 :746-754 , mai 1998.
[6] « Multipass laser ablation of three coloured ink from a paper substrate » par Steward R., Li L. Thomas D., Journal of Materials Processing Technology 114 (2) : 161-167, 20 juillet 2001.
[7] Brevet américain US6117061, délivré le 12 septembre 2000.

## Revendications

1. Dispositif périphérique comprenant des moyens d'impression d'une feuille de papier, des moyens de découpe de ladite feuille de papier et des moyens de réception d'instructions, les moyens d'impression comportant une première tête d'impression (4) par éjection d'encre, alimentée par une cartouche d'encre conventionnelle, pour imprimer du texte (9) ou des dessins sur la feuille de papier (3) en fonction des instructions reçues, **caractérisé en ce que** les moyens d'impression comportent une deuxième tête d'impression (1) par éjection d'encre, alimentée par une cartouche d'encre absorbante capable de pénétrer en profondeur dans la feuille de papier, pour éjecter en fonction des instructions reçues l'encre sur des endroits à découper, et les moyens de découpe comportent un laser (2) de faible puissance émettant, en fonction d'instructions reçues, un faisceau laser à une longueur d'onde absorbée par les endroits encrés à l'encre absorbante (7), la puissance du laser étant suffisante pour obtenir la découpe (11) de la feuille de papier aux endroits encrés et/ou une ablation partielle (10,13) du papier.

2. Dispositif selon la revendication 1, **caractérisé en ce que** l'encre absorbante comporte des pigments minéraux ou organiques et un solvant.

3. Dispositif selon la revendication 1, **caractérisé en ce que** l'encre absorbante est conçue de sorte que les endroits encrés à l'encre absorbante (7) absorbent au moins 50% du faisceau laser à sa longueur d'onde de fonctionnement.

4. Dispositif selon la revendication 1, **caractérisé en ce que** l'encre absorbante est conçue de sorte que les endroits encrés à l'encre absorbante (7) absorbent 80% ou plus du faisceau laser à sa longueur d'onde de fonctionnement.

5. Dispositif selon la revendication 3 ou 4, **caractérisé en ce que** l'encre absorbante conserve ses bonnes propriétés d'absorption à la longueur d'onde du laser jusqu'à une température d'au moins 200°C et de préférence jusqu'à 250°C.

6. Dispositif selon la revendication 1, **caractérisé en ce que** l'encre absorbante comporte un constituant qui produit une combustion exothermique lorsqu'il atteint une température critique, cette température critique étant comprise entre 150°C et 400°C.

7. Dispositif selon la revendication 1, **caractérisé en ce que** l'encre absorbante est incolore dans le domaine visible.

8. Dispositif selon la revendication 1, **caractérisé en ce que** l'encre absorbante est blanche dans le domaine visible.

9. Dispositif selon la revendication 1, **caractérisé en ce que** la deuxième tête d'impression (1) éjecte de l'encre de façon à imprimer des motifs sous forme de traits, de tirets ou de points dont la largeur n'excède pas 500 µm.

10. Dispositif selon la revendication 1, **caractérisé en ce que** la deuxième tête d'impression (1) éjecte une quantité d'encre comprise entre 0,5 et 5 nl par mm de trait de découpe.

11. Dispositif selon la revendication 1, **caractérisé en ce que** le laser (2) émet un faisceau laser à une longueur d'onde comprise entre 650 et 1600 nm.

12. Dispositif selon la revendication 1, **caractérisé en ce que** le laser (2) a une puissance lumineuse moyenne comprise entre 0,5 et 10 watts.

13. Dispositif selon la revendication 12, **caractérisé en ce que** le laser (2) a une puissance lumineuse moyenne comprise entre 1 et 4 watts.

14. Dispositif selon la revendication 12 ou 13, **caractérisé en ce que**, si le laser (2) fonctionne en mode pulsé, la puissance moyenne du laser est au minimum 100 fois inférieure aux puissances de crêtes du laser.

15. Dispositif selon la revendication 12 ou 13, **caractérisé en ce que**, si le laser (2) fonctionne en mode pulsé, la puissance moyenne du laser est au minimum 10 fois inférieure aux puissances de crêtes du laser.

16. Dispositif selon la revendication 1, **caractérisé en ce que** le laser (2) comprend une ou plusieurs diodes semi-conductrices.

17. Dispositif selon la revendication 1, **caractérisé en ce que** le laser (2) comprend un dispositif de focalisation (18) du faisceau laser.

18. Dispositif selon la revendication 17, **caractérisé en ce que** le dispositif de focalisation (18) du faisceau laser fournit un spot dont les dimensions sont comprises entre 10 µm et 400 µm, sur une profondeur de champ d'au moins 80 µm.

19. Dispositif selon la revendication 1, **caractérisé en ce que** les moyens d'impression et les moyens de découpe de la feuille de papier sont situés sur le même chariot de déplacement latéral (5).

20. Dispositif selon la revendication 1, **caractérisé en ce qu'**au moins une face de la feuille de papier (3) au voisinage de la zone illuminée par le laser se trouve en contact avec un matériau dont la diffusivité thermique est au minimum dix fois supérieure à celle du papier.

21. Dispositif selon la revendication 20, **caractérisé en ce que** le matériau (17) en contact avec la feuille de papier au voisinage de la zone illuminée par le laser est sous la forme d'une tête de découpe laser qui comporte :
- une zone de contact avec la feuille ayant une surface d'au moins 0,5cm²,
- une partie ajourée dans cette zone de contact permettant le passage du faisceau laser (19) et ayant, à l'endroit où elle est en contact avec le papier, une section égale ou supérieure à 1 mm²,
- une arrivée d'air pur (20) et un conduit d'évacuation des fumées de combustion (21).

22. Procédé d'alignement d'une cartouche d'encre conventionnelle (4) et du faisceau laser du dispositif selon l'une quelconque des revendications 1 à 21, **caractérisé en ce qu'**il est réalisé de la manière suivante :
- réalisation d'une première série de marques parallèles sur une feuille de papier à l'aide de la cartouche d'encre de la première tête d'impression (4), ces marques étant séparées d'un premier pas déterminé,
- réalisation, en face de la première série de marques, d'une deuxième série de marques parallèles à l'aide de la cartouche d'encre de la deuxième tête d'impression (1), lesdites marques de la deuxième série ayant une largeur d'encrage suffisante pour compenser le désalignement possible entre la cartouche d'encre absorbante et le laser, et étant séparées d'un deuxième pas déterminé différent du premier pas,
- réalisation de découpes laser (partielles ou totales) à l'aide du laser (2) sur la série de marques encrées à l'encre absorbante,
- observation des découpes et désignation à l'imprimante ou à l'ordinateur pilote des marques imprimées à l'encre conventionnelle qui coïncident avec les découpes.

23. Procédé d'alignement d'une cartouche d'encre absorbante (1) et du faisceau laser du dispositif selon l'une quelconque des revendications 1 à 21, **caractérisé en ce qu'**il est réalisé de la manière suivante :
- réalisation d'une zone de marques parallèles sur une feuille de papier à l'aide de la cartouche d'encre absorbante de la deuxième tête d'impression, chaque marque étant séparée d'un premier pas déterminé et ayant une largeur qui ne dépasse pas celle du spot laser,
- utilisation du faisceau laser pour réaliser des lignes de spots dans la zone de marques, les lignes de spots étant parallèles aux marques précédentes et étant séparées d'un pas déterminé différent du premier pas,
- observation des marques et désignation à l'imprimante ou à l'ordinateur pilote des marques qui ont subi une découpe.

24. Procédé d'ajustement de la vitesse de découpage du dispositif selon l'une quelconques des revendications 1 à 21, **caractérisé en ce qu'**il est réalisé de la manière suivante :
- réalisation de marques sur une feuille (3) à l'aide de la cartouche d'encre de la deuxième tête d'impression,
- passages du spot laser sur ces marques à différentes vitesses,
- observation des conditions à partir desquelles on obtient une découpe complète.

25. Système informatique comprenant, d'une part un ordinateur et un logiciel, et d'autre part un dispositif périphérique selon l'une quelconque des revendications 1 à 21, l'ordinateur et le logiciel permettant de définir des motifs à découper (7) en cohérence avec les motifs à imprimer (8) que l'on veut réaliser sur une feuille de papier, et fournissant au dispositif périphérique des instructions permettant à ce dernier de réaliser ces impressions et découpes.

26. Système selon la revendication 25, **caractérisé en ce que** l'ordinateur et le logiciel fournissent des instructions au dispositif périphérique permettant de réaliser des interruptions dans la découpe du papier par rapport au motif de découpe visé.

27. Système selon la revendication 26, **caractérisé en ce qu'**il distingue les zones de papier découpées à éliminer que l'opérateur doit achever d'enlever à la main à l'aide d'un marquage approprié (9) réalisé avec la première tête d'impression (4).

28. Procédé de création de documents ou d'objets papiers **caractérisé par le fait qu'**il utilise le système informatique selon l'une des revendications 25 à 27.

29. Procédé de réalisation d'une structure collée comprenant les étapes suivantes :
- on réalise un document à partir d'une feuille de papier (3) au moyen du système informatique selon l'une quelconque des revendications 25 à 27, ledit document comportant au moins une partie à encoller repérée par un motif d'encollage,
- on fournit au dispositif phériphérique un multicouche comportant successivement un support siliconé (25), un film d'adhésif (26) et une pellicule superficielle imprimable (27), le film d'adhésif (26) adhérant mieux à la pellicule (27) qu'au support (25), et adhérant mieux au document réalisé dans la première étape qu'à la pellicule (27), la pellicule (27) et le film d'adhésif (26) étant absorbant à la longueur d'onde de fonctionnement du laser,
- on réalise sur le multicouche un motif d'encollage (29), correspondant au motif d'encollage réalisé sur le document, par impression de la pellicule superficielle à l'aide de la première tête d'impression du dispositif,
- on réalise une découpe (28) sur le multicouche au moyen du laser, pour délimiter dans la pellicule superficielle (27) et le film adhésif (26) une zone englobant le motif d'encollage et de dimension correspondant à la partie à encoller du document,
- on sépare ladite zone du support siliconé,
- on positionne la zone, côté film adhésif, sur le document en faisant correspondre les motifs d'encollage du document et de la pellicule superficielle,
- on retire la pellicule superficielle de ladite zone,
- on procède à l'encollage d'une partie du document sur lequel se trouve le film d'adhésif ou d'un autre document.

## Claims

1. Peripheral device comprising means for printing a paper sheet, means for cutting the said paper sheet and means for receiving instructions, the print means comprising a first print head (4) by ink ejection, supplied by a conventional ink cartridge to print text (9) or drawings on the sheet of paper (3) as a function of the received instructions, **characterized in that** the print means comprise a second print head (1) by ink ejection, supplied by an absorbent ink cartridge capable of in depth penetration into the paper sheet to eject ink onto the locations to be cut out as a function of the received instructions, and the cutting means comprise a low power laser (2) emitting a laser beam with a wavelength absorbed by locations marked with absorbent ink (7) as a function of instructions received, the power of the laser being sufficient to cut (11) the paper sheet at the inked locations and/or for partial ablation (10, 13) of the paper.

2. Device according to claim 1, **characterized in that** the absorbent ink comprises mineral or organic pigments and a solvent.

3. Device according to claim 1, **characterized in that** the absorbent ink is designed such that locations inked with absorbent ink (7) absorb at least 50% of the laser beam at its operating wavelength.

4. Device according to claim 1, **characterised in that** the absorbent ink is designed such that locations inked with absorbent ink (7) absorb 80% or more of the laser beam at its operating wavelength.

5. Device according to claim 3 or 4, **characterised in that** the absorbent ink maintains its good absorption properties at the laser wavelength up to a temperature equal to at least 200°C and preferably up to 250°C.

6. Device according to claim 1, **characterised in that** the absorbent ink comprises a constituent that produces exothermal combustion when it reaches a critical temperature, this critical temperature being between 150°C and 400°C.

7. Device according to claim 1, **characterised in that** the absorbent ink is colourless in the visible range.

8. Device according to claim 1, **characterised in that** the absorbent ink is white in the visible range.

9. Device according to claim 1, **characterised in that** the second print head (1) ejects ink so as to print patterns in the form of lines, dashes or dots not more than 500 µm wide.

10. Device according to claim 1, **characterised in that** the second print head (1) ejects a quantity of ink equal to between 0.5 and 5 nl per mm of cut line.

11. Device according to claim 1, **characterised in that** the laser (2) emits a laser beam with a wavelength of between 650 and 1600 nm.

12. Device according to claim 1, **characterised in that** the laser (2) has an average light power between 0.5 and 10 watts.

13. Device according to claim 12, **characterised in that** the laser (2) has an average light power between 1 and 4 watts.

14. Device according to claim 12 or 13, **characterised in that** if the laser (2) operates in pulsed mode, the laser average power is at least 100 times lower than the laser peak powers.

15. Device according to claim 12 or 13, **characterised in that** if the laser (2) operates in pulsed mode, the laser average power is at least 10 times lower than the laser peak powers.

16. Device according to claim 1, **characterised in that** the laser (2) comprises one or several semiconducting laser diodes.

17. Device according to claim 1, **characterised in that** the laser (2) comprises a laser beam focusing device (18).

18. Device according to claim 17, **characterised in that** the laser beam focusing device (18) outputs a light spot with dimensions between 10 µm and 400 µm, on a field depth equal to at least 80 µm.

19. Device according to claim 1, **characterised in that** the paper sheet printing means and cutting means are located on the same lateral displacement carriage (5).

20. Device according to claim 1, **characterised in that** at least one face of the paper sheet (3) close to the area illuminated by the laser is in contact with a material with a thermal diffusivity equal to at least 10 times more than the thermal diffusivity of the paper.

21. Device according to claim 20, **characterised in that** the material (17) in contact with the paper sheet close to the area illuminated by the laser is in the form of a laser cutting head which comprises :
- a contact area in contact with the sheet and having a surface of at least 0.5 cm²;
- a perforated part in this contact area enabling passage of the laser beam (19), and with a section equal to or greater than 1 mm² at the location at which it comes into contact with the paper ;
- a pure air inlet (20) and a combustion fumes evacuation duct (21).

22. Procedure for aligning a conventional ink cartridge (4) with the laser beam of the device according to any one of claims 1 to 21, **characterised in that** it is done as follows :
- a first series of parallel marks is made on a paper sheet using the ink cartridge of the first print head (4), these marks being separated by a determined pitch ;
- a second series of parallel marks is then made facing the first series of marks, using the ink cartridge of the second print head (1), the inking width of the said marks in the second series being sufficient to compensate for any possible misalignment between the absorbent ink cartridge and the laser, and being spaced by a second determined pitch different from the first pitch ;
- laser cuts (partial or total) are then made on the series of marks inked with absorbent ink, using the laser (2) ;
- cuts are observed and information is sent to the printer or the computer controlling the printer to identify which marks printed with conventional ink coincide with the cuts.

23. Procedure for aligning an absorbent ink cartridge (1) with the laser beam of the device according to any one of claims 1 to 21, **characterised in that** it is done as follows :
- a first area of parallel marks is made on a paper sheet using the absorbent ink cartridge of the second print head, each mark being separated by a first determined pitch and having a width not exceeding the width of the laser spot ;
- the laser beam is used to make lines of spots in the marked area, the lines of spots being parallel to the previous marks and being separated by a determined pitch different from the first pitch ;
- marks are observed and information is sent to the printer or the computer controlling the printer to identify which marks have been cut.

24. Procedure for adjusting the cutting speed of the device according to any one of claims 1 to 21, **characterised in that** it is done as follows :
- marks are made on a sheet (3) using the ink cartridge of the second print head ;
- the laser spot is passed over these marks at different speeds ;
- the operator observes the conditions under which a complete cut can be obtained.

25. Computer system including firstly a computer and software, and secondly a peripheral device according to any one of claims 1 to 21, the computer and the software being used to define patterns (7) to be cut out coherent with the patterns (8) to be printed that are to be made on a paper sheet, and providing instructions to the peripheral device so that this peripheral device can make these printouts and cuts.

26. System according to claim 25, **characterised in that** the computer and the software supply instructions to the peripheral device so that it can make interruptions in the paper cut following the target cutting pattern.

27. System according to claim 26, **characterised in that** it determines cut paper areas to be eliminated, using an appropriate marking (9) done with the first print head (4), leaving the operator free to manually detach these cut paper areas later.

28. Method for creating documents or paper objects, **characterised in that** it uses the computer system according to one of claims 25 to 27.

29. Method for making a glued structure, comprising the following steps :
- make a document from a sheet of paper (3) using the computer system according to any one of claims 25 to 27, the said document comprising at least one part on which glue is to be applied marked by a gluing pattern ;
- a multi-layer comprising, in order, a silicone coated support (25), an adhesive film (26), and a printable surface film (27) is fed into the peripheral device, the adhesive film (26) bonding to the film (27) better than to the support (25), and bonding to the document made in the first step better than to the film (27), the film (27) and the adhesive film (26) being absorbent at the operating wavelength of the laser ;
- a gluing pattern (29) corresponding to the gluing pattern made on the document is made on the multi-layer by printing the surface film using the first print head of the peripheral device ;
- a cut (28) is then made on the multi-layer using the laser, in order to delimit an area surrounding the gluing pattern in the surface film (27) and the adhesive film (26), with dimensions corresponding to the part of the document on which glue is to be applied;
- the said area is separated from the silicone coated support ;
- the adhesive film side of the area is positioned on the document making the gluing patterns of the document and the surface film correspond ;
- the surface film is removed from the said area ;
- the operator sticks a part of the document on which the adhesive film is located, or another document.

## Patentansprüche

1. Peripherievorrichtung mit Einrichtungen zum Bedrucken eines Papierbogens, Einrichtungen zum Schneiden eines Papierbogens und Einrichtungen für den Empfang von Instruktionen, wobei die Druckeinrichtungen einen ersten Tintenstrahldruckerkopf (4) umfassen, versorgt durch eine konventionelle Tintenpatrone, um auf den Papierbogen (3) Text (9) oder Zeichnungen zu drucken, in Abhängigkeit von den erhaltenen Instruktionen,
**dadurch gekennzeichnet, dass** die Druckeinrichtungen einen zweiten Tintenstrahldruckerkopf (1) umfassen, versorgt durch eine Patrone mit Absorptionstinte, fähig tief in den Papierbogen einzudringen, der in Abhängigkeit von empfangenen Instruktionen die Tinte auf zu schneidende Stellen spritzt, und dass die Schneideinrichtungen einen Laser (2) mit schwacher Leistung umfassen, der in Abhängigkeit von empfangenen Instruktionen einen Laserstrahl mit einer Wellenlänge emittiert, die von den mit der Absorptionstinte bespritzten Stellen (7) absorbiert wird, wobei die Leistung des Lasers ausreicht für ein Durchschneiden (11) des Papierbogens an den mit Tinte bespritzten Stellen und/oder für eine partielle Ablation (10, 13) des Papiers.

2. Vorrichtung nach Anspruch 1, **dadurch gekennzeichnet, dass** die Absorptionstinte mineralische oder organische Pigmente und ein Lösungsmittel umfasst.

3. Vorrichtung nach Anspruch 1, **dadurch gekennzeichnet, dass** die Absorptionstinte so beschaffen ist, dass die mit Absorptionstinte bespitzten Stellen (7) wenigstens 50% des Laserstrahls bei seiner Betriebswellenlänge absorbieren.

4. Vorrichtung nach Anspruch 1, **dadurch gekennzeichnet, dass** die Absorptionstinte so beschaffen ist, dass die mit Absorptionstinte bespitzten Stellen (7) wenigstens 80% oder mehr des Laserstrahls bei seiner Betriebswellenlänge absorbieren.

5. Vorrichtung nach Anspruch 3, **dadurch gekennzeichnet, dass** die Absorptionstinte ihre guten Absorptionseigenschaften bei der Wellenlänge des Lasers bis zu einer Temperatur von wenigstens 200°C und vorzugsweise 250°C beibehält.

6. Vorrichtung nach Anspruch 1, **dadurch gekennzeichnet, dass** die Absorptionstinte einen Bestandteil enthält, der eine exothermische Verbrennung erzeugt, wenn er eine kritische Temperatur erreicht, wobei diese kritische Temperatur zwischen 150°C und 400°C enthalten ist.

7. Vorrichtung nach Anspruch 1, **dadurch gekennzeichnet, dass** die Absorptionstinte im sichtbaren Bereich farblos ist.

8. Vorrichtung nach Anspruch 1, **dadurch gekennzeichnet, dass** die Absorptionstinte im sichtbaren Bereich weiß ist.

9. Vorrichtung nach Anspruch 1, **dadurch gekennzeichnet, dass** der zweite Tintenstrahldruckerkopf (1) die Tinte so spritzt, dass er Muster in Form von Strichen, Trennungszeichen oder Punkten druckt, deren Breite 500 µm nicht überschreitet.

10. Vorrichtung nach Anspruch 1, **dadurch gekennzeichnet, dass** der zweite Tintenstrahldruckerkopf (1) pro mm Schnittstrich eine zwischen 0,5 und 5 nl enthaltene Tintenmenge ausstößt.

11. Vorrichtung nach Anspruch 1, **dadurch gekennzeichnet, dass** der Laser (2) einen Laserstrahl mit einer zwischen 650 und 1600 nm enthaltenen Wellenlänge emittiert.

12. Vorrichtung nach Anspruch 1, **dadurch gekennzeichnet, dass** der Laser (2) eine zwischen 0,5 und 10 W enthaltene mittlere Lichtleistung hat.

13. Vorrichtung nach Anspruch 12, **dadurch gekennzeichnet, dass** der Laser (2) eine zwischen 1 und 4 W enthaltene mittlere Lichtleistung hat.

14. Vorrichtung nach Anspruch 12 oder 13, **dadurch gekennzeichnet, dass** der Laser (2) im Pulsbetrieb arbeitet, wobei die mittlere Leistung des Lasers minimal hundertmal niedriger ist als die Spitzenleistungen des Lasers.

15. Vorrichtung nach Anspruch 12 oder 13, **dadurch gekennzeichnet, dass** der Laser (2) im Pulsbetrieb arbeitet, wobei die mittlere Leistung des Lasers minimal zehnmal niedriger ist als die Spitzenleistungen des Lasers.

16. Vorrichtung nach Anspruch 1, **dadurch gekennzeichnet, dass** der Laser (2) eine oder mehrere Halbleiterdioden umfasst.

17. Vorrichtung nach Anspruch 1, **dadurch gekennzeichnet, dass** der Laser (2) eine Fokussiereinrichtung (18) des Laserstrahls umfasst.

18. Vorrichtung nach Anspruch 17, **dadurch gekennzeichnet, dass** die Fokussiereinrichtung (18) des Laserstrahls einen Spot liefert, dessen Dimensionen über eine Feldtiefe bzw. Tiefenschärfe von wenigstens 80 µm zwischen 10 µm und 400 µm enthalten sind.

19. Vorrichtung nach Anspruch 1, **dadurch gekennzeichnet, dass** die Druckeinrichtungen und die Schneideinrichtungen des Papierbogens sich auf demselben seitlich verschiebbaren Wagen (5) befinden.

20. Vorrichtung nach Anspruch 1, **dadurch gekennzeichnet, dass** wenigstens eine Fläche des Papierbogens (3) in der Umgebung des durch den Laser bestrahlten Bereichs Kontakt mit einem Material hat, dessen thermisches Diffusionsvermögen minimal zehnmal höher ist als das des Papiers.

21. Vorrichtung nach Anspruch 20, **dadurch gekennzeichnet, dass** das Material (17), das in der Umgebung des durch den Laser bestrahlten Bereichs Kontakt mit dem Papierbogen hat, die Form eines Laserschneidkopfs hat, der umfasst:
- einen Kontaktbereich mit dem Papierbogen mit einer Fläche von wenigstens 0,5 cm²,
- einen in diesem Kontaktbereich ausgesparten Teil, der den Durchgang des Laserstrahls (19) ermöglicht, und der an der Stelle, wo er mit dem Papier Kontakt hat, einen Querschnitt gleich oder größer als 1 mm² aufweist,
- eine Reinluftzuführung (20) und eine Verbrennungsrauch-Abzugleitung (21).

22. Verfahren zur Ausrichtung einer konventionellen Tintenpatrone (4) und des Laserstrahls der Vorrichtung nach einem der Ansprüche 1 bis 21, **dadurch gekennzeichnet, dass** es folgendermaßen durchgeführt wird:
- Realisierung einer ersten Serie paralleler Markierungen auf einem Papierbogen mit Hilfe der Tintenpatrone des ersten Druckerkopfs (4),
- Realisierung - gegenüber der ersten Serie von Markierungen - einer zweiten Serie paralleler Markierungen mit Hilfe der Tintenpatrone des zweiten Druckerkopfs (1), wobei die genannten Markierungen der zweiten Serie eine ausreichende Druckbreite haben, um die möglichen Ausrichtungsmängel zwischen der Absorptionstintenpatrone und dem Laser zu kompensieren, und mittels einer zweiten Teilung getrennt sind, die sich von der ersten Teilung unterscheidet,
- Realisierung von (partiellen oder totalen) Laserschnitten mit Hilfe des Lasers (2) bei einer Serie von Absorptionstintenmarkierungen,
- Beobachtung der Schnitte und Bezeichnung der mit konventioneller Tinte gedruckten Markierungen, die mit den Schnitten übereinstimmen, mit dem Drucker oder mit dem Steuercomputer.

23. Verfahren zur Ausrichtung einer Absorptionstintenpatrone (1) und des Laserstrahls der Vorrichtung nach einem der Ansprüche 1 bis 21, **dadurch gekennzeichnet, dass** es folgendermaßen durchgeführt wird:
- Realisierung einer Zone paralleler Markierungen auf einem Papierbogen mit Hilfe der Absorptionstintenpatrone des zweiten Druckerkopfs, wobei jede Markierung mittels einer ersten bestimmten Teilung getrennt ist und eine Breite hat, die diejenige des Laserspots nicht überschreitet,
- Benutzung des Laserstrahls zur Realisierung der Spotlinien in der Markierungszone, wobei die Spotlinien zu den vorhergehenden Markierungen parallel sind und durch eine bestimmte Teilung getrennt sind, die sich von der ersten Teilung unterscheidet,
- Beobachtung der Markierungen und Bezeichnung der Markierungen, die einem Schnitt unterzogen wurden, mit dem Drucker oder mit dem Steuercomputer.

24. Verfahren zur Anpassung der Schnittgeschwindigkeit der Vorrichtung nach einem der Ansprüche 1 bis 21, **dadurch gekennzeichnet, dass** es folgendermaßen durchgeführt wird:
- Realisieren von Markierungen auf einem Papierbogen (3) mit Hilfe der Tintenpatrone und des zweiten Druckerkopfs,
- mehrmaliges Passieren bzw. Bestreichen dieser Markierungen mit dem Laserspot mit verschiedenen Geschwindigkeiten,
- Beobachten der Bedingungen, ab denen man ein komplettes Schneiden erhält.

25. Informatiksystem, das einerseits einen Computer und eine Software umfasst und andererseits eine Peripherievorrichtung nach einem der Ansprüche 1 bis 21, wobei der Computer und die Software ermöglichen, zu schneidende Muster (7) in Übereinstimmung mit den zu druckenden Mustern (8), die man auf einem Papierbogen realisieren will, zu definieren und der Peripherievorrichtung Instruktionen zu liefern, die dieser letzteren ermöglichen, diese Drucke und Schnitte zu realisieren.

26. System nach Anspruch 25, **dadurch gekennzeichnet, dass** der Computer und die Software der Peripherievorrichtung Instruktionen liefern, die ermöglichen, beim Schneiden des Papiers auf das angestrebte Muster bezogene Unterbrechungen zu realisieren.

27. System nach Anspruch 26, **dadurch gekennzeichnet, dass** es die zu beseitigenden geschnittenen Papierzonen, die die Bedienungsperson von Hand entfernen muss, erkennbar macht durch eine entsprechende Markierung (9), realisiert mit dem ersten Druckerkopf (4).

28. Verfahren zur Herstellung von Dokumenten oder Papierobjekten bzw. - gegenständen, **dadurch gekennzeichnet, dass** es das Informatiksystem nach einem der Ansprüche 25 bis 27 benutzt.

29. Verfahren zur Herstellung einer Klebungsstruktur mit den folgenden Schritten:
- man realisiert ein Dokument mit Hilfe des Informatiksystems nach einem der Ansprüche 25 bis 27 auf einem Papierbogen, wobei das genannte Dokument wenigstens einen durch ein Klebemuster markierten zu klebenden Teil umfasst,
- man liefert der Peripherievorrichtung eine Multischicht bzw. einen Multischichtbogen mit sukzessiv einem silikonisierten Träger (25), einem Haftfilm (26) und einer bedruckbaren Oberflächenfolie (27), wobei der Haftfilm (26) besser an der Folie (27) haftet als an dem Träger (25), und besser an dem im ersten Schritt realisierten Dokument haftet als an der Folie (27), wobei die Folie (27) und der Haftfilm (26) bei der Betriebswellenlänge des Lasers absorptionsfähig sind,
- man realisiert auf dem Multischichtbogen ein Klebemuster (29), das dem auf dem Dokument realisierten Klebemuster entspricht, indem man die Oberflächenfolie mit Hilfe des ersten Druckerkopfs der Vorrichtung bedruckt,
- man realisiert in dem Multischichtbogen mit Hilfe des Lasers einen Schnitt (28), um in der Oberflächenfolie (27) und in dem Haftfilm (26) eine Zone abzugrenzen, die das Klebemuster umschließt und deren Dimensionen dem zu klebenden Teil des Dokuments entsprechen,
- man trennt die genannte Zone von dem silikonisierten Träger,
- man positioniert die Zone mit der Haftfilmseite auf dem Dokument, indem man die Klebemuster des Dokuments und der Oberflächenfolie in Übereinstimmung bringt,
- man zieht die Oberflächenfolie von der genannten Zone ab,
- man schreitet zur Klebung eines Teils des Dokuments, auf dem sich der Haftfilm befindet, oder eines anderen Dokuments.
